# EUROPEAN PATENT SPECIFICATION

(11) **EP 2 175 737 B1**
(45) Date of publication and mention of the grant of the patent: **22.02.2017**
(21) Application number: 08786770.1
(22) Date of filing: 01.08.2008
(51) Int. Cl.: A23C 9/127

(54) **METHOD FOR PRODUCING AN ACIDIFIED MILK DRINK**
VERFAHREN ZUR HERSTELLUNG EINES GESÄUERTEN MILCHGETRÄNKS
PROCEDE DE PRODUCTION D'UNE BOISSON LACTEE ACIDIFIEE

(30) Priority: 02.08.2007 EP 07113688
(43) Date of publication of application: 21.04.2010
(73) Proprietor: Chr. Hansen A/S, 2970 Hoersholm (DK)
(72) Inventor: TAMS, Jeppe, Wegener, DK-2820 Gentofe (DK); JOERGENSEN, Christel, Thea, DK-2800 Kgs. Lyngby (DK); ERNST, Steffen, DK-2700 Broenshoej (DK); NIELSEN, Per, Munk,, DK-3400 Hilleroed (DK)
(86) International application number: PCT/EP2008/060150
(87) International publication number: WO 2009/016257

(56) References cited:
- EP-A- 0 610 649
- EP-A- 2 011 402
- WO-A-93/19610
- WO-A-2007/026053
- WO-A-2007/060288
- WO-A1-2007/123223
- BONISCH ET AL: "Yoghurt gel formation by means of enzymatic protein cross-linking during microbial fermentation" FOOD HYDROCOLLOIDS, ELSEVIER, vol. 21, no. 4, 16 January 2007 (2007-01-16), pages 585-595, XP005736325 ISSN: 0268-005X
- YAN G ET AL: "Enhancement of microbial transglutaminase production by Streptoverticillium mobaraense: application of a two-stage agitation speed control strategy" PROCESS BIOCHEMISTRY, ELSEVIER, NL, vol. 40, no. 2, 1 February 2005 (2005-02-01), pages 963-968, XP025306521 ISSN: 1359-5113 [retrieved on 2005-02-01]
- LORENZEN P C ET AL: "Impact of enzymatic crosslinking of milk protein on the properties of stirred yoghurt and stirred cultured milk products", KIELER WIRTSCHAFTLICHE FORSCHUNGSBERICHTE, VERLAG TH. MANN, GELSENKIRCHEN, DE, vol. 57, no. 2, 1 January 2005 (2005-01-01), pages 97-115, XP009112258, ISSN: 0023-1347

## Description

### SEQUENCE LISTING

The present invention comprises a sequence listing.

### TECHNICAL FIELD

The present invention relates to a method for producing an acidified milk drink using an enzyme having transglutaminase activity.

### BACKGROUND OF THE INVENTION

The market for acidified milk drinks, which includes fermented milk drinks and liquid yoghurt, is increasing worldwide and there is an interest in improving the quality and economics of this product.

Acidified milk drinks are generally produced by mixing acidified milk with a sugar syrup solution, and subjecting the mixture to a homogenization treatment. Acidification may take place through addition of a chemical, such as glucono delta-lactone (GDL), or it may be caused by fermentation of the milk with lactic acid bacteria. When such products are stored, however, casein, an ingredient of milk, often precipitates or associates and aggregates, and as a result the drinks tend to separate so that liquid whey collects on the surface. This process, which is often referred to as syneresis, decreases the quality of the acidified milk drinks.

Pectin, starch, modified starch, CMC, etc., are often used as stabilizers in acidified milk drinks, but due to the relatively high cost of such stabilizers, there is an interest in finding other and perhaps even better solutions.

The use of enzymes having transglutaminase activity for modification of food proteins, including dairy proteins, is known in the prior art. For instance, JP2835940-B2 describes manufacturing of a milk protein containing acid beverage, and shows that a milk drink comprising dissolved skim milk powder treated with transglutaminase, followed by chemical acidification, retains opaque white turbidity upon heat sterilization due to less precipitation of milk protein. EP0671885 describes a method for production of a milk like product comprising transglutaminase treatment followed by acidification. Herein, a transglutaminase treated milk like product where acidification is performed as a biological fermentation is shown to exhibit a consistency of a semi-solid yoghurt. Further, a reconstituted yoghurt prepared from transglutaminase treated skim milk is shown to have a more homogenous consistence compared to an untreated control.

Treatment with transglutaminase during the manufacturing of fermented milk products is known to increase the viscosity of the product. WO2007/060288 demonstrates that addition of transglutaminase during the production of fermented milk products such as yoghurt allows for reducing the protein content of the milk substrate to still obtain a yoghurt having a high viscosity.

Lorenzen, P. C. et al. (2005): "Impact of enzymatic crosslinking of milk protein on the properties of stirred yogurt and stirred cultured milk products.", Kieler Milchwirtschaftliche Forschungsberichte 57 (2) 97-115, have disclosed the preparation of a cultured milk product which involved adding transglutaminase treated milk powder or whey protein product to low fat milk and fermenting with a sour milk culture.

In an industrial process for manufacturing of a fermented milk drink, it would be desirable to concentrate the milk substrate before carrying out the fermentation, and then dilute the fermented milk substrate at a later step in the manufacturing process to obtain a milk drink having the desired content of milk solids. Concentration before fermentation and dilution afterwards reduces the requirement for fermentation tank capacity and therefore reduces the manufacturing costs. However, prior art teaches that increasing the protein content in a milk substrate to be fermented will result in a fermented product having a higher viscosity (see, e.g., WO2007/060288), and treatment with transglutaminase will further increase the viscosity.

It is an object of the present invention to provide a method for manufacturing of a stable fermented milk drink, where syneresis upon storage is reduced. It is also an object to provide a method for manufacturing from a concentrated milk substrate a stable fermented milk drink, which is drinkable, i.e. a free-flowing liquid.

### SUMMARY OF THE INVENTION

The present inventors have surprisingly found that a fermented milk drink produced from a milk substrate having a high protein content can be stabilized with transglutaminase and still retain the low viscosity which is desired for a product to be consumed as a beverage.

Consequently, the present invention relates to a method for producing an acidified milk drink, said method comprising:
a) providing a milk substrate having a protein content of more than 5%;
b) treating the milk substrate with an enzyme having transglutaminase activity;
c) fermenting the milk substrate with a microorganism; and
d) diluting the fermented milk substrate at least 1.5 times to obtain the acidified milk drink;
wherein step b) is performed before, during or after step c).

The acidified milk drink produced by any method of the present invention is drinkable, i.e. to be consumed as a beverage.

In a preferred embodiment, the fermented milk substrate is mixed with a syrup and the mixture is subjected to homogenization to obtain the acidified milk drink.

In another preferred embodiment, the milk substrate is subjected to pasteurization before fermentation and the transglutaminase treatment is performed before pasteurization

In another preferred embodiment, the milk substrate is subjected to heat treatment prior to the transglutaminase treatment. Preferably, such heat treatment results in more than 50% denaturation of the whey protein in the milk substrate.

### DETAILED DISCLOSURE OF THE INVENTION

### Acidified milk drinks

"Acidified milk drinks" in the context of the present invention include any drinkable product based on acidified milk substrates, thus including fermented milk drinks and liquid yoghurt drinks. In the methods of the present invention, acidification is performed as a fermentation with a microorganism.

Acidified milk drinks in the context of the invention are drinkable in the sense that they are in liquid form and consumed as beverages, i.e. they are suitable for drinking instead of being eaten with a spoon. "In liquid form" means that the products are in the fluid state of matter thus exhibiting a characteristic readiness to flow. Thus, the shape of a liquid is usually determined by the container it fills, in contrary to e.g. a gel-like substance, which is soft, but not free flowing, such as e.g. yoghurt or pudding. Acidified milk drinks in the context of the invention may have a viscosity allowing the consumer to drink the products using a straw if desired.

In a preferred aspect, acidified milk drinks in the context of the invention have a viscosity measured as discharge time from a 10 ml pipette which is substantially the same as the discharge time of an acidified milk drink produced without transglutaminase. In this context, a discharge time which is substantially the same means that it is less than 20% increased, preferably less than 15% increased and more preferably less than 10% increased.

An acidified milk drink in the context of the present invention may have a pH of less than 4.6, preferably less than 4.4, more preferably less than 4.2 and even more preferably about pH 4 or less. In one aspect, the acidified milk drink has a pH of less than 3.8, such as less than 3.6.

An acidified milk drink in the context of the invention may have a fat content of 0 to 2%, preferably below 1.5%, below 1% or below 0.5%, more preferably of about 0.1% or less. The acidified milk drink may have a milk solid non-fat content of less than 20%, preferably less than 8.5%, less than 8%, less than 7.5%, less than 7%, less than 6.5% or less than 6%, and more preferably of about 5%.

An acidified milk drink in the context of the invention may have a protein content of between 0.5 and 4%. In one preferred aspect, the acidified milk drink has a protein content of below 1%. In another preferred aspect, the acidified milk drink has a protein content of between 2% and 3%.

An acidified milk drink in the context of the invention may have a shelf life of more than 7 days, preferably more than 14 days, more preferably more than 28 days, such as more than 3 months.

An acidified milk drink in the context of the present invention has an increased stability. The stability may be determined after having stored the acidified milk drink for an appropriate number of days by measuring the height of the whey collecting on the surface because of syneresis. It may also be determined after accelerated syneresis, such as by centrifugation.

### Method of producing an acidified milk drink

As mentioned above, the method for producing an acidified milk drink according to the present invention comprises:
a) providing a milk substrate having a protein content of more than 5%;
b) treating the milk substrate with an enzyme having transglutaminase activity;
c) fermenting the milk substrate with a microorganism; and
d) diluting the fermented milk substrate at least 1.5 times to obtain the acidified milk drink;
wherein step b) is performed before, during or after step c).

"Milk substrate", in the context of the present invention, may be any raw and/or processed milk material that can be subjected to acidification according to the method of the invention. Thus, useful milk substrates include, but are not limited to, solutions/suspensions of any milk or milk like products comprising protein, such as whole or low fat milk, skim milk, buttermilk, reconstituted milk powder, condensed milk, dried milk, whey, whey permeate, lactose, mother liquid from crystallization of lactose, whey protein concentrate, or cream. Obviously, the milk substrate may originate from any mammal.

The milk substrate is more concentrated than raw milk, i.e. the protein content is higher than in raw milk. The protein content is more than 5%, preferably more than 6%, such as more than 7%, more preferably more than 8%, such as more than 9% or more than 10%. Preferably, the lactose content is also higher than in raw milk, such as more than 7%, more than 8%, more than 9%, more than 10%, more than 11% or more than 12%. In a preferred embodiment of this aspect, the milk substrate is a concentrated aqueous solution of skim milk powder having a protein content of more than 5% and a lactose content of more than 7%.

In the context of the present invention, percentages defining the content of the milk substrate or the content of the acidified milk drink are mass percentages, i.e. the mass of a substance (e.g. protein or lactose) as a percentage of the mass of the entire solution (milk substrate or acidified milk drink). Thus, in a milk substrate having a protein content of more than 5%, the mass of the proteins constitutes more than 5% of the mass of the milk substrate.

Preferably, at least part of the protein in the milk substrate is proteins naturally occurring in milk, such as casein or whey protein. However, part of the protein may be proteins which are not naturally occurring in milk.

The term "milk" is to be understood as the lacteal secretion obtained by milking any mammal, such as cows, sheep, goats, buffaloes or camels. In a preferred embodiment, the milk is cow's milk.

Prior to fermentation, the milk substrate may be homogenized and pasteurized according to methods known in the art.

"Homogenizing" as used herein means intensive mixing to obtain a soluble suspension or emulsion. If homogenization is performed prior to fermentation, it may be performed so as to break up the milk fat into smaller sizes so that it no longer separates from the milk. This may be accomplished by forcing the milk at high pressure through small orifices.

"Pasteurizing" as used herein means treatment of the milk substrate to reduce or eliminate the presence of live organisms, such as microorganisms. Preferably, pasteurization is attained by maintaining a specified temperature for a specified period of time. The specified temperature is usually attained by heating. The temperature and duration may be selected in order to kill or inactivate certain bacteria, such as harmful bacteria. A rapid cooling step may follow.

In the methods of the present invention, the milk substrate is acidified by fermentation with a microorganism. Optionally, such acidification by fermentation is combined with chemical acidification of the milk substrate.

"Fermentation" in the methods of the present invention means the conversion of carbohydrates into alcohols or acids through the action of a microorganism. Preferably, fermentation in the methods of the invention comprises conversion of lactose to lactic acid.

In the context of the present invention, "microorganism" may include any bacterium or fungus being able to ferment the milk substrate.

The microorganisms used for most fermented milk products are selected from the group of bacteria generally referred to as lactic acid bacteria. As used herein, the term "lactic acid bacterium" designates a gram-positive, microaerophilic or anaerobic bacterium, which ferments sugars with the production of acids including lactic acid as the predominantly produced acid, acetic acid and propionic acid. The industrially most useful lactic acid bacteria are found within the order "Lactobacillales" which includes *Lactococcus* spp., *Streptococcus* spp., *Lactobacillus* spp., *Leuconostoc* spp., *Pseudoleuconostoc* spp., *Pediococcus* spp., *Brevibacterium* spp., *Enterococcus* spp. and *Propionibacterium* spp. Additionally, lactic acid producing bacteria belonging to the group of the strict anaerobic bacteria, bifidobacteria, i.e. *Bifidobacterium* spp., are generally included in the group of lactic acid bacteria. These are frequently used as food cultures alone or in combination with other lactic acid bacteria,

Lactic acid bacteria are normally supplied to the dairy industry either as frozen or freeze-dried cultures for bulk starter propagation or as so-called "Direct Vat Set" (DVS) cultures, intended for direct inoculation into a fermentation vessel or vat for the production of a dairy product, such as an acidified milk drink. Such cultures are in general referred to as "starter cultures" or "starters".

Commonly used starter culture strains of lactic acid bacteria are generally divided into mesophilic organisms having optimum growth temperatures at about 30°C and thermophilic organisms having optimum growth temperatures in the range of about 40 to about 45°C. Typical organisms belonging to the mesophilic group include *Lactococcus lactis, Lactococcus lactis* subsp. *cremoris, Leuconostoc mesenteroides* subsp. *cremoris, Pseudoleuconostoc mesenteroides* subsp. *cremoris, Pediococcus pentosaceus, Lactococcus lactis* subsp. *lactis biovar. diacetylactis, Lactobacillus casei* subsp. *casei* and *Lactobacillus paracasei* subsp. *paracasei.* Thermophilic lactic acid bacterial species include as examples *Streptococcus thermophilus, Enterococcus faecium, Lactobacillus delbrueckii* subsp. *lactis, Lactobacillus helveticus, Lactobacillus delbrueckii* subsp. *bulgaricus* and *Lactobacillus acidophilus.*

Also the strict anaerobic bacteria belonging to the genus *Bifidobacterium* including *Bifidobacterium bifidum* and *Bifidobacterium longum* are commonly used as dairy starter cultures and are generally included in the group of lactic acid bacteria. Additionally, species of *Propionibacteria* are used as dairy starter cultures, in particular in the manufacture of cheese. Additionally, organisms belonging to the *Brevibacterium* genus are commonly used as food starter cultures.

Another group of microbial starter cultures are fungal cultures, including yeast cultures and cultures of filamentous fungi, which are particularly used in the manufacture of certain types of cheese and beverage. Examples of fungi include *Penicillium roqueforti, Penicillium candidum, Geotrichum candidum, Torula kefir, Saccharomyces kefir and Saccharomyces cerevisiae.*

In a preferred embodiment, the microorganism used for fermentation
of the milk substrate is *Lactobacillus casei* or a mixture of *Streptococcus thermophilus* and *Lactobacillus delbrueckii* subsp. *bulgaricus.*

Optionally, the fermented milk substrate may be subjected to heat treatment to inactivate the microorganism.

Fermentation processes to be used in production of acidified milk drinks are well known and the person of skill in the art will know how to select suitable process conditions, such as temperature, oxygen, amount and characteristics of microorganism(s) and process time. Obviously, fermentation conditions are selected so as to support the achievement of the present invention, i.e. to obtain a fermented milk product suitable in the production of an acidified milk drink.

Likewise, the skilled person will know if and when additives such as, e.g., carbohydrates, flavours, minerals, enzymes (e.g. rennet, lactase and/or phospholipase) are to be used in production of acidified milk drinks according to the invention.

The fermented milk substrate is diluted to obtain the acidified milk drink. The fermented milk substrate is diluted at least 1.5 times, preferably at least 2 times, at least 2.5 times or at least 3 times. It may be diluted with water or an aqueous solution of any kind. "Diluted at least 1.5 times" in the context of the present invention means that the fermented milk substrate is diluted so that its volume is increased by at least 50%.

In one embodiment, a syrup is added to the fermented milk substrate.

"Syrup" in the context of the present invention is any additional additive ingredient giving flavour and/or sweetness to the final product, i.e. the acidified milk drink. It may be a solution comprising, e.g., sugar, sucrose, glucose, liquid sugar of fructose, aspartame, sugar alcohol, fruit concentrate, orange juice, strawberry juice and/or lemon juice.

The mixture of the fermented milk substrate and the syrup may be homogenized using any method known in the art. The homogenization may be performed so as to obtain a liquid homogenous solution which is smooth and stable. Homogenization of the mixture of the acidified milk substrate and the syrup may be performed by any method known in the art, such as by forcing the milk at high pressure through small orifices.

In another embodiment, water is added to the fermented milk substrate, and
the mixture of fermented milk substrate and water is homogenized.

The methods of the present invention comprise treatment of the milk substrate with an enzyme having transglutaminase activity. The enzyme treatment may be performed prior to fermentation, such as before inoculation with the microorganism. The enzyme treatment may be performed at the same time as the fermentation. In one embodiment, the enzyme is added before, at the same time or after inoculation of the milk substrate with a microorganism, and the enzyme reaction on the milk substrate takes place at essentially the same time as it is being fermented.

Alternatively, the enzyme treatment may be performed after fermentation. If the acidified milk substrate is mixed and optionally homogenized with the syrup, the enzyme treatment may be performed before or after this. The enzyme may be added at the same time or after the syrup, but before homogenization, or it may be added after the acidified milk substrate and the syrup have been mixed and homogenized.

In a preferred embodiment, enzyme treatment is performed before or during fermentation. In a more preferred embodiment, the milk substrate is subjected to pasteurization prior to fermentation, and the enzyme treatment is performed before pasteurization. The pasteurization may thus inactivate the enzyme.

In another preferred embodiment, the milk substrate is subjected to heat treatment, such as pasteurization, prior to treatment with transglutaminase. The heat treatment may be performed so that more than 50%, preferably more than 60%, more than 70% or more than 80%, of the whey protein in the milk substrate is denatured. In the context of the present invention, whey protein is denatured when it sediments at pH 4.5. In a more preferred embodiment, the milk substrate is subjected to heat treatment followed by homogenisation prior to treatment with transglutaminase.

In another preferred embodiment, yeast extract or a reducing agent such as glutathione is added to the milk substrate prior to treatment with transglutaminase.

Another heat treatment, such as a pasteurization, may be performed after the enzyme treatment so as to inactivate the enzyme.

The enzyme having transglutaminase activity is added in a suitable amount to achieve the desired degree of protein modification under the chosen reaction conditions. The enzyme may be added at a concentration of between 0.0001 and 1 g/L milk substrate, preferably between 0.001 and 0.1 g/L milk substrate.

The enzymatic treatment in the methods of the invention may be conducted by adding the enzyme to the milk substrate and allowing the enzyme reaction to take place at an appropriate holding-time at an appropriate temperature. The enzyme treatment may be carried out at conditions chosen to suit the selected protein modifying enzyme according to principles well known in the art. The treatment may also be conducted by contacting the milk substrate with an enzyme that has been immobilised.

The enzyme treatment may be conducted at any suitable pH, such as, e.g., in the range of pH 2-10, such as, at a pH of 4-9 or 5-7. It may be preferred to let the enzyme act at the natural pH of the milk substrate, or, if acidification is obtained because of fermentation, the enzyme may act at the natural pH of the milk substrate during the fermentation process, i.e. the pH will gradually decrease from the natural pH of the unfermented milk substrate to the pH of the fermented milk substrate.

The enzyme treatment may be conducted at any appropriate temperature, e.g. in the range 1-80°C, such as 2-70°C. In one embodiment of the present invention, the enzyme treatment may preferably be conducted at a temperature in the range 40-50°C. In another embodiment, the enzyme treatment may preferably be conducted at a temperature of below 10°C.

Optionally, after the enzyme has been allowed to act on the milk substrate, the enzyme protein may be removed, reduced, and/or inactivated by any method known in the art, such as by heat treatment and/or reduction of pH.

Optionally, other ingredients may be added to the acidified milk drink, such as colour; stabilizers, e.g. pectin, starch, modified starch, CMC, etc.; or polyunsaturated fatty acids, e.g. omega-3 fatty acids. Such ingredients may be added at any point during the production process, i.e. before or after fermentation, before or after enzyme treatment, and before or after the optional addition of syrup. In a preferred embodiment, the transglutaminase treatment is combined with the addition of CMC.

In one aspect of the present invention, the dissolved oxygen level of the milk substrate is reduced to below 80% of the saturation level. Preferably, the dissolved oxygen level is reduced to below 70%, more preferably to below 60% and even more preferably to below 50% of the saturation level.

The dissolved oxygen concentration in the milk substrate is the amount of oxygen found in the solution. It may be measured in milligrams per liter of substrate (mg/1) or an equivalent unit, parts per million of oxygen to water (ppm). It depends on various factors, such as temperature, pressure, and the amounts of various dissolved or suspended solids in the milk substrate. It can be measured with a dissolved oxygen probe such as an oxygen sensor.

The dissolved oxygen level is a relative measure of the amount of oxygen that is dissolved or carried in the substrate. It is calculated as the percentage of dissolved oxygen concentration in the milk substrate relative to that when the milk substrate is completely saturated at the same temperature and the same pressure.

Percent saturation is calculated by dividing the measured dissolved oxygen concentration by the saturation level under the same conditions and multiplying by 100.

The dissolved oxygen level of the milk substrate may be reduced by any method known in the art. It may be reduced by nitrogen flushing or by carbon dioxide flushing or by using an oxygen scavenging enzyme, preferably an oxidoreductase, such as a carbohydrate oxidase, a cellobiose oxidase, a glucose oxidase, a hexose oxidase or a lactose oxidase. An enzyme having catalase activity may be added with the oxidoreductase.

The dissolved oxygen level of the milk substrate may be reduced prior to or at the same time as the treatment with the transglutaminase. It may be reduced prior to or at the same time as the fermentation. And if the milk substrate is pasteurized, the dissolved oxygen level may be reduced before or after pasteurization.

### Enzyme having transglutaminase activity

In the methods of the present invention, an enzyme having transglutaminase activity is used in the production of acidified milk drinks, thus decreasing the syneresis upon storage.

In the context of the present invention, an enzyme having transglutaminase activity may be an enzyme which catalyzes the acyl transfer between the gamma-carboxylamide group of peptide-bound glutamine (acyl donor) and primary amines (acyl acceptor), e.g. peptide-bound lysine. Free acid amides and amino acids also react. Proteins and peptides may thus be cross linked in this way. Transglutaminase may also, e.g. if amines are absent, catalyze the deamination of glutamine residues in proteins with H₂O as the acyl acceptor.

A transglutaminase according to the invention may also be referred to as, e.g., protein glutamine-gamma-glutamyl transferase, Factor Xllla, fibrinoligase, fibrin stabilizing factor, glutaminylpeptide gamma-glutamyltransferase, polyamine transglutaminase, tissue transglutaminase, or R-glutaminyl-peptide:amine gamma-glutamyl transferase. The group of transglutaminases comprises but is not limited to the enzymes assigned to subclass EC 2.3.2.13. In the context of the present invention, transglutaminase may also be referred to as TGase.

A transglutaminase to be used according to the invention is preferably purified. The term "purified" as used herein covers enzyme protein preparations where the preparation has been enriched for the enzyme protein in question. Such enrichment could for instance be: the removal of the cells of the organism from which an enzyme protein was produced, the removal of non-protein material by a protein specific precipitation or the use of a chromatographic procedure where the enzyme protein in question is selectively adsorbed and eluted from a chromatographic matrix. The transglutaminase may have been purified to an extent so that only minor amounts of other proteins are present. The expression "other proteins" relate in particular to other enzymes. A transglutaminase to be used in the method of the invention may be "substantially pure", i.e. substantially free from other components from the organism in which it was produced, which may either be a naturally occurring microorganism or a genetically modified host microorganism for recombinant production of the transglutaminase.

However, for the uses according to the invention, the transglutaminase need not be that pure. It may, e.g., include other enzymes.

In a preferred aspect, the transglutaminase to be used in the method of the invention has been purified to contain at least 20%, preferably at least 30%, at least 40% or at least 50%, (w/w) of transglutaminase out of total protein. The amount of transglutaminase may be calculated from an activity measurement of the preparation divided by the specific activity of the transglutaminase (activity/mg EP), or it may be quantified by SDS-PAGE or any other method known in the art. The amount of total protein may, e.g., be measured by amino acid analysis.

In one embodiment of the methods of the invention, the enzyme having transglutaminase activity is recombinantly produced.

In some aspects of the present invention, the enzyme having transglutaminase activity may be of animal, of plant or of microbial origin. Preferred enzymes are obtained from microbial sources, in particular from a filamentous fungus or yeast, or from a bacterium. For purposes of the present invention, the term "obtained from" as used herein in connection with a given source shall mean that the enzyme originates from the source. The enzyme may be produced from the source or from a strain in which the nucleotide sequence encoding the enzyme has been inserted, i.e. a recombinant strain. In a preferred embodiment, the polypeptide obtained from a given source is secreted extracellularly.

The enzyme may, e.g., be obtained from a strain of *Agaricus,* e.g. *A. bisporus; Ascovaginospora; Aspergillus,* e.g. *A. niger, A. awamori, A. foetidus, A. japonicus, A. oryzae; Chaetomium; Chaetotomastia; Dictyostelium,* e.g. *D. discoideum; Mucor,* e.g. *M. javanicus, M. mucedo, M. subtilissimus; Neurospora,* e.g. *N. crassa; Rhizomucor,* e.g. *R. pusillus; Rhizopus,* e.g. *R. arrhizus, R. japonicus, R. stolonifer Sclerotinia,* e.g. S. *libertiana; Trichophyton,* e.g. *T. rubrum; Whetzelinia,* e.g. *W. sclerotiorum; Bacillus,* e.g. *B. megaterium, B. subtilis, B. pumilus, B. stearothermophilus, B. thuringiensis; Chryseobacterium; Citrobacter,* e.g. C. *freundii; Enterobacter,* e.g. *E. aerogenes, E. cloacae Edwardsiella, E. tarda; Erwinia,* e.g. *E. herbicola; Escherichia,* e.g. *E. coli; Klebsiella,* e.g. *K. pneumoniae; Miriococcum; Myrothesium; Mucor; Neurospora,* e.g. *N. crassa; Phytophthora,* e.g. *P. cactorum; Proteus,* e.g. *P. vulgaris; Providencia,* e.g. *P. stuartii; Pycnoporus,* e.g. *Pycnoporus cinnabarinus, Pycnoporus sanguineus; Salmonella,* e.g. *S*. *typhimurium; Serratia,* e.g. S. *liquefasciens, S. marcescens; Shigella,* e.g. *S*. *flexneri; Streptomyces,* e.g. *S*. *antibioticus, S. castaneoglobisporus, S. lydicus, S. mobaraensis, S. violeceoruber Streptoverticilium,* e.g. *S*. *mobaraensis; Trametes; Trichoderma,* e.g. *T. reesei, T. viride; Yersinia,* e.g. *Y. enterocolitica.*

In a preferred embodiment, the enzyme is a transglutaminase obtained from a bacterium, e.g. an Actinobacterium from the class Actinobacteria, such as from the subclass Actinobacteridae, such as from the order Actinomycetales, such as from the suborder Streptomycineae, such as from the family Streptomycetaceae, such as from a strain of *Streptomyces,* such as S. *lydicus or S. mobaraensis.*

In another embodiment, the enzyme is a transglutaminase obtained from a fungus, e.g. from the class *Oomycetes,* such as from the order *Peronosporales,* such as from the family *Pythiaceae,* such as from the genera *Pythium* or *Phytophthora,* such as from a strain of *Phytophthora cactorum.* A preferred enzyme in this embodiment is a transglutaminase having a sequence which is at least 50%, such as at least 60%, at least 70%, at least 80% or at least 90% identical to SEQ ID NO: 3 or to a transglutaminase active fragment thereof.

For all aspects of the present invention, a preferred enzyme is a transglutaminase having a sequence which is at least 50%, such as at least 60%, at least 70%, at least 80% or at least 90% identical to SEQ ID NO: 1 or to a transglutaminase active fragment thereof. Another preferred enzyme is a transglutaminase having a sequence which is at least 50%, such as at least 60%, at least 70%, at least 80% or at least 90% identical to SEQ ID NO: 2 or to a transglutaminase active fragment thereof.

According to the present invention, transglutaminase activity may be determined by any method known in the art, such as by incubating the enzyme with gamma-carboxamid group of protein- or peptide-bound glutamine and an amine group, e.g. protein- or peptide-bound lysine, in a buffer at various pH and temperatures, e.g. 50 mM MES at pH 6.5 at 37°C for 30 minutes. The detection of enzyme activity can be followed by the release of ammonia (e.g. kit obtained from Roche NH3-11877984) or using hydroxylamine as amine group donor (the amount of Glutamic acid gamma-hydroxamate formed in the reaction is detected as a red complex with ferric ions under acid conditions measured at 510 nm) or by determination of the epsilon-(gamma-glutamyl)lysin by amino acid analysis.

### EXAMPLE 1

### Preparation of acidified milk drink samples and measurement of syneresis

### SKMP solution (skim milk powder solution)

600 ml water + 135 g skim milk powder (instant dispersibility from Kerry, Ireland) was incubated at 50°C for 10 min before use, so a homogeneous solution was obtained.

### Sugar solution

33 g sucrose
105 g glucose

These sugars were added to 460 ml 20 mM lactic acid buffer, pH 4.0 and incubated at 90°C for 5 min with stirring and then cooled down to 5°C.

### Sugar solution with pectin

33 g sucrose
2.25 g pectin (Geno pectin YM-115-I from CP Kelco)
105 g glucose

These sugars were added to 460 ml 20 mM lactic acid buffer, pH 4.0 and incubated at 90°C for 5 min with stirring and then cooled down to 5°C.

### Enzyme

Activa TG *(Streptomyces mobaraensis* transglutaminase from Ajinomoto, Japan), 1620 TGHU/g, was diluted to give the final concentrations indicated in the Tables. (TGHU = TransGlutaminase Hydroxamate Units).

### Procedure

25 ml SKMP solution was transferred to 100 ml measuring cylinder. 2 ml Enzyme or water (control) was added and incubation was performed for 120 min at 50°C.

The solution was incubated at 85°C for 30 min in a water bath and hereafter incubated at 43°C (water bath) for 10 min with magnetic stirring. 3 ml 4 U/I YF-3331 (mixed strain culture containing *Streptococcus thermophilus* and *Lactobacillus delbrueckii* subsp. *bulgaricus* from Chr. Hansen A/S, Denmark) was added and incubation was performed for 16 hours at 43°C.

Hereafter the samples were incubated at 0-5°C ice/water bath for 20 min. 60 ml sugar solution with or without pectin (0-5°C, ice bath) was added and homogenised with ultrasound (7 x 5 sec with 9 sec pause) on ice bath.

The samples were placed at 5°C for 4 days and syneresis was measured.

The syneresis height was measured and the relative syneresis of total milk drink height was calculated.

**Syneresis measurements**

| | Syneresis (% of total height) |
|---|---|
| | % |
| 1800 TGHU/I | 1.4 |
| 1800 TGHU/I | 1.8 |
| 450 TGHU/I | 0.8 |
| 450 TGHU/I | 1.6 |
| 180 TGHU/I | 4.9 |
| 180 TGHU/I | 4.5 |
| no TGase | 5.9 |
| no TGase | 6.2 |
| no TGase + pectin | 0.0 |
| no TGase + pectin | 0.0 |

### EXAMPLE 2

### Measurement of viscosity of acidified milk drink preparations

The viscosity of the acidified milk drink preparation from EXAMPLE 1 was measured, in sec, as the discharge time from a 10 ml pipette.

**Viscosity measurements:**

| | average of three measurements | st. dev. |
|---|---|---|
| | sec | sec |
| 1800 TGHU/I | 9.16 | 0.04 |
| 1800 TGHU/I | 9.04 | 0.04 |
| 450 TGHU/I | 8.82 | 0.40 |
| 450 TGHU/I | 8.86 | 0.21 |
| 180 TGHU/I | 8.52 | 0.02 |
| 180 TGHU/I | 8.61 | 0.38 |
| no TGase | 8.34 | 0.21 |
| no TGase + pectin | 9.46 | 0.10 |
| no TGase + pectin | 9.30 | 0.12 |

### EXAMPLE 3

### The effect of oxygen removal during transglutaminase treatment

### SKMP solution

600 ml water + 135 g skim milk powder (instant dispersibility from Kerry, Ireland) was incubated at 50°C for 10 min before use, so a homogeneous solution was obtained.

### Sugar solution

33 g sucrose
105 g glucose

These sugars were added to 460 ml 20 mM lactic acid buffer, pH 4.0 and incubated at 90°C for 5 min with stirring and then cooled down to 5°C.

### Enzyme

Activa TG (*Streptomyces mobaraensis* transglutaminase from Ajinomoto, Japan), 1620 TGHU/g, was diluted to give the final concentrations indicated in the Table.

### Procedure

375 microliters SKMP solution was transferred to 2 ml eppendorf tube. 30 microliters Enzyme or water (control) was added and flushed with N₂ for 30 sec (control without N₂ flush), hereafter incubation was performed for 120 min at 40°C.

The solution was incubated at 85°C for 30 min in a water bath and hereafter incubated at 43°C (water bath) for 10 min with mixing (1000 rpm) in an Eppendorf Thermomixer. 45 microliters 4 U/I YF-3331 (mixed strain culture containing *Streptococcus thermophilus* and *Lactobacillus delbrueckii* subsp. *bulgaricus* from Chr. Hansen A/S, Denmark) solubilised in 9% SKMP was added and incubation was performed for 16 hours at 43°C.

Hereafter the samples were incubated at 0-5°C ice/water bath for 20 min.

900 microliters sugar solution (0-5°C, ice bath) was added and homogenised with ultrasound (6 x 5 sec with 9 sec pause) on ice bath.

The samples were placed at 5°C for 7 days and syneresis was measured.

The syneresis height was measured and the relative syneresis of total milk drink height was calculated.

Double determinations are shown in the table below.

**Syneresis measurements**

| | % relative syneresis compared to total height | % relative syneresis compared to total height |
|---|---|---|
| 880 TGHU/I | 10 | 11 |
| 150 TGHU/I | 21 | 22 |
| control | 22 | 21 |
| 880 TGHU/I + N2 | 5.0 | 5.0 |
| 150 TGHU/I + N2 | 15 | 17 |
| control + N2 | 17 | 19 |

### EXAMPLE 4

### The effect of transglutaminase treatment before pasteurization using various SKMP concentrations

### SKMP solution

231 ml water + 69 g skim milk powder (instant dispersibility from Kerry, Ireland) was incubated at 50°C for 10 min before use, so a homogeneous solution was obtained.

### Sugar solution

5.66 g sucrose
18.0 g glucose

These sugars were added to 46 ml 20 mM lactic acid buffer, pH 4.0 and incubated at 90°C for 5 min with stirring and then cooled down to 5°C.

### Enzyme

Activa TG *(Streptomyces mobaraensis* transglutaminase from Ajinomoto, Japan), 1620 TGHU/g, was diluted to give the final concentrations indicated in the Table.

### Procedure

293 microliters SKMP solution + 0 microliters, 82 microliters, 189 microliters and 457 microliters water for sample 1, 2, 3 and 4, respectively, was transferred to 2 ml eppendorf tube. 30 microliters Enzyme or water (control) was added and incubation was performed for 120 min at 40°C.

The solution was incubated at 85°C for 30 min in a water bath and incubated at 43°C (water bath) for 10 min with mixing (1000 rpm) in an Eppendorf Thermomixer. Hereafter, 457 microliters, 375 microliters, 268 microliters and 0 microliters water was added for sample 1, 2, 3, and 4, respectively. 45 microliters 4 U/I YF-3331 (mixed strain culture containing *Streptococcus thermophilus* and *Lactobacillus delbrueckii* subsp. *bulgaricus* from Chr. Hansen A/S, Denmark) solubilised in 9% SKMP was added and incubation was performed for 16 hours at 43°C.

Hereafter, the samples were incubated at 0-5°C ice/water bath for 20 min.

525 microliters sugar solution (0-5°C, ice bath) was added and homogenised with ultrasound (6 x 5 sec with 9 sec pause) on ice bath.

The samples were placed at 5°C for 4 days and syneresis was measured.

The syneresis height was measured and the relative syneresis of total milk drink height was calculated.

Double determinations are shown in the table below. Enzyme concentration is shown per liter acidified milk drink.

**Syneresis measurements**

| TGase conc. | SKMP conc. before pasteurization | Relative syneresis of total height (%) | Relative syneresis of total height (%) |
|---|---|---|---|
| TGHU/I | % | % | % |
| 900 | 16.6 | 8 | 9 |
| 0 | 16.6 | 48 | 48 |
| 900 | 13.2 | 8 | 10 |
| 0 | 13.2 | 50 | 50 |
| 900 | 8.6 | 10 | 10 |
| 0 | 8.6 | 50 | 54 |
| 900 | 20.9 | 9 | 8 |
| 0 | 20.9 | 52 | 51 |

### EXAMPLE 5

### Combination of TGase treatment and milk fat or CMC with final heat treatment

### Milk

Arla express milk obtained from supermarket (Bagsvaerd, Denmark) was used:
skimmed milk: 3.5% protein, 4.7% carbohydrate and 0.1% fat;
semi-skimmed milk: 3.4% protein, 4.7% carbohydrate and 1.5% fat; and
full cream milk: 3.4% protein, 4.7% carbohydrate and 3.5% fat.

The milk was incubated at 95°C for 5 min before use.

### Sugar solutions

18% sucrose, 20 mM Lactic acid, pH 4.0.
0.75% CMC, 18% sucrose, 20 mM Lactic acid, pH 4.0.
0.375% CMC, 18% sucrose, 20 mM Lactic acid, pH 4.0.
0.15% CMC, 18% sucrose, 20 mM Lactic acid, pH 4.0.

### Enzyme

Purified GMM *S*. *Mobaraensis* (SM) TGase 25 mg/ml was diluted to give the final concentrations indicated in the table below.

### Procedure

375 microliters milk was transferred to 2 ml eppendorf tube. 30 microliters Enzyme or water (control) was added, hereafter incubation was performed for 120 min at 40°C.

The solution was incubated at 85°C for 30 min in a water bath and hereafter incubated at 43°C (water bath) for 10 min with mixing (1000 rpm) in an Eppendorf Thermomixer.

45 microliters 4 U/I YF-3331 (mixed strain culture containing *Streptococcus thermophilus* and *Lactobacillus delbrueckii* subsp. *bulgaricus* from Chr. Hansen A/S, Denmark) solubilised in skimmed milk was added and incubation was performed for 16 hours at 43°C.

Hereafter the samples were incubated at 0-5°C ice/water bath for 20 min.

900 microliters sugar solution (0-5°C, ice bath) was added and homogenised with ultrasound (6 x 5 sec, 50% amplitude, with 9 sec pause) on ice bath. This solution was incubated at 80°C for 5 min and chilled to 25°C with mixing (1000 rpm) in an Eppendorf Thermomixer. An additional homogenization was performed with ultrasound (6 x 5 sec, 50% amplitude, with 9 sec pause) on ice bath. The samples were placed at room temp. 20-24°C for 10 days and syneresis was measured.

The syneresis height was measured and the relative syneresis of total milk drink height was calculated.

Double determinations are shown in the table below. MD is the mean deviation. Enzyme concentration is shown per liter acidified milk drink.

| | Syneresis height % | MD |
|---|---|---|
| SM 20 mg/l, 1% fat | 0 | 0 |
| SM 4 mg/l, 1% fat | 0 | 0 |
| 1% fat | 67.7 | 7.0 |
| SM 20 mg/l, 0.4% fat | 20.8 | 4.4 |
| SM 4 mg/l, 0.4% fat | 26.2 | 2.5 |
| 0.4% fat | 73.3 | 0.39 |
| SM 20 mg/l, 0.03% fat, 0.5% CMC | 0 | 0 |
| SM 20 mg/l, 0.03% fat, 0.25% CMC | 10.5 | 0.26 |
| SM 20 mg/l, 0.03% fat, 0.1% CMC | 63.8 | 2.8 |
| 0.03% fat, 0.5% CMC | 63 | 28 |
| 0.03% fat, 0.25% CMC | 90.8 | 0.54 |
| 0.03% fat, 0.1% CMC | 57.4 | 1.1 |

### EXAMPLE 6

### Combination of TGase treatment and milk fat or CMC without final heat treatment

### Milk

Arla express milk obtained from supermarket (Bagsvaerd, Denmark) was used:
skimmed milk: 3.5% protein, 4.7% carbohydrate and 0.1% fat;
semi-skimmed milk: 3.4% protein, 4.7% carbohydrate and 1.5% fat; and
full cream milk: 3.4% protein, 4.7% carbohydrate and 3.5% fat.

The milk was incubated at 95°C for 5 min before use.

### Sugar solutions

18% sucrose, 20 mM Lactic acid, pH 4.0.
0.75% CMC, 18% sucrose, 20 mM Lactic acid, pH 4.0.
0.375% CMC, 18% sucrose, 20 mM Lactic acid, pH 4.0.
0.15% CMC,18% sucrose, 20 mM Lactic acid, pH 4.0.

### Enzyme

Purified GMM *S*. *Mobaraensis* (SM) TGase 25 mg/ml was diluted to give the final concentrations indicated in the table below.

### Procedure

375 microliters milk was transferred to 2 ml eppendorf tube. 30 microliters Enzyme or water (control) was added, hereafter incubation was performed for 120 min at 40°C.

The solution was incubated at 85°C for 30 min in a water bath and hereafter incubated at 43°C (water bath) for 10 min with mixing (1000 rpm) in an Eppendorf Thermomixer. 45 microliters 4 U/I YF-3331 (mixed strain culture containing *Streptococcus thermophilus* and *Lactobacillus delbrueckii* subsp. *bulgaricus* from Chr. Hansen A/S, Denmark) solubilised in skimmed milk was added and incubation was performed for 16 hours at 43°C.

Hereafter the samples were incubated at 0-5°C ice/water bath for 20 min.

900 microliters sugar solution (0-5°C, ice bath) was added and homogenized with ultrasound (6 x 5 sec, 50% amplitude, with 9 sec pause) on ice bath. The samples were placed at 5°C for 14 days and syneresis was measured.

The syneresis height was measured and the relative syneresis of total milk drink height was calculated.

Double determinations are shown in the table below. MD is the mean deviation. Enzyme concentration is shown per liter acidified milk drink.

| | Syneresis height % | MD |
|---|---|---|
| SM 20 mg/l, 1% fat | 0 | 0 |
| SM 4 mg/l, 1% fat | 1.5 | 1.5 |
| 1% fat | 8.6 | 3.4 |
| SM 20 mg/l, 0.4% fat | 11.0 | 1.4 |
| SM 4 mg/l, 0.4% fat | 12.6 | 7.2 |
| 0.4% fat | 45.0 | 0.8 |
| SM 20 mg/l, 0.03% fat, 0.5% CMC | 0 | 0 |
| SM 20 mg/l, 0.03% fat, 0.25% CMC | 5.3 | 2.9 |
| SM 20 mg/l, 0.03% fat, 0.1% CMC | 8.0 | 2.7 |
| 0.03% fat, 0.5% CMC | 27.9 | 0.9 |
| 0.03% fat, 0.25% CMC | 89.1 | 0.5 |
| 0.03% fat, 0.1% CMC | 47.2 | 0.4 |

### EXAMPLE 7

### Comparison of three different TGases

### Milk

Arla express skimmed milk obtained from supermarket (Bagsvaerd, Denmark) was used. The milk was incubated at 95°C for 5 min before use.

### Sugar solutions

18% sucrose, 20 mM Lactic acid, pH 4.0.

### Enzyme

Purified *Streptomyces Mobaraensis* (SM) TGase 25 mg/ml, *Streptomyces Lydicus* (SL) TGase 28 mg/ml and *Phytophthora cactorum* (PC) 6 mg/ml was diluted to give the final concentrations indicated in the Table.

### Procedure

375 microliters milk was transferred to 2 ml eppendorf tube. 30 microliters Enzyme or water (control) was added, hereafter incubation was performed for 120 min at 40°C.

The solution was incubated at 85°C for 30 min in a water bath and hereafter incubated at 43°C (water bath) for 10 min with mixing (1000 rpm) in an Eppendorf Thermomixer. 45 microliters 4 U/I YF-3331 (mixed strain culture containing *Streptococcus thermophilus* and *Lactobacillus delbrueckii* subsp. *bulgaricus* from Chr. Hansen A/S, Denmark) solubilised in milk was added and incubation was performed for 16 hours at 43°C.

Hereafter the samples were incubated at 0-5°C ice/water bath for 20 min.

900 microliters sugar solution (0-5°C, ice bath) was added and homogenized with ultrasound (6 x 5 sec, 50% amplitude, with 9 sec pause) on ice bath. The samples were placed at 5°C for 14 days and syneresis was measured.

The syneresis height was measured and the relative syneresis of total milk drink height was calculated.

Double determinations are shown in the table below. MD is the mean deviation. Enzyme concentration is shown per liter acidified milk drink.

| | Syneresis height % | MD |
|---|---|---|
| SL, 100 mg/l AMD | 34.0 | 2.0 |
| SL, 20 mg/l AMD | 28.0 | 0 |
| SL, 4 mg/l AMD | 44.1 | 0.7 |
| SL, 0.9 mg/l AMD | 58.7 | 0.8 |
| SM, 100 mg/l AMD | 15.6 | 0.9 |
| SM, 20 mg/l AMD | 16.0 | 1.8 |
| SM, 4 mg/l AMD | 15.7 | 4.3 |
| SM, 0.9 mg/l AMD | 48.9 | 0.8 |
| PC, 100 mg/l AMD | 31.7 | 4.5 |
| PC, 20 mg/l AMD | 52.1 | 2.9 |
| PC, 4 mg/l AMD | 59.6 | 2.4 |
| Control | 62.6 | 0.7 |

## Claims

1. A method for producing an acidified milk drink, said method comprising:
a) providing a milk substrate having a protein content of more than 5%;
b) treating the milk substrate with an enzyme having transglutaminase activity;
c) fermenting the milk substrate with a microorganism; and
d) diluting the fermented milk substrate at least 1.5 times to obtain the acidified milk drink; wherein step b) is performed before, during or after step c).

2. The method of claim 1, wherein the dissolved oxygen level of the milk substrate is reduced to below 80% of the saturation level.

3. The method of any of the preceding claims, wherein the milk substrate is subjected to pasteurization before fermentation and the enzyme treatment is performed before pasteurization.

4. The method of any of the preceding claims, wherein the milk substrate is subjected to heat treatment prior to treatment with the enzyme having transglutaminase activity.

5. The method of any of the preceding claims, wherein glutathione is added to the milk substrate prior to treatment with the enzyme having transglutaminase activity.

6. The method of any of the preceding claims, wherein the microorganism is a lactic acid bacterium.

7. The method of any of the preceding claims, wherein the fermented milk substrate is mixed with a syrup and the mixture is subjected to homogenization.

8. The method of any of the preceding claims, wherein the acidified milk drink is consumed as a beverage.

9. The method of any of the preceding claims, wherein the acidified milk drink has a milk solid non-fat content of less than 8%.

10. The method of any of the preceding claims, wherein the acidified milk drink has a fat content of less than 2%.

11. The method of claim 10, wherein the acidified milk drink has a fat content of less than 0.5%.

12. The method of any of the preceding claims, wherein the enzyme having transglutaminase activity is recombinantly produced.

13. The method of any of the preceding claims, wherein the enzyme having transglutaminase activity is obtained from a bacterium belonging to the genus *Streptomyces.*

14. The method of any of the preceding claims, wherein the enzyme has at least 50% identity to SEQ ID NO: 1 or SEQ ID NO: 2, or to a transglutaminase active fragment of any of these.

## Patentansprüche

1. Verfahren zur Herstellung eines gesäuerten Milchgetränks, wobei das Verfahren folgendes umfasst:
a) Bereitstellung eines Milchsubstrats mit einem Proteingehalt von mehr als 5 %,
b) Behandlung des Milchsubstrats mit einem Enzym, das Transglutaminaseaktivität aufweist,
c) Fermentierung des Milchsubstrats mit einem Mikroorganismus, und
d) mindestens 1,5-fache Verdünnung des gegorenen Milchsubstrats, um das gesäuerte Milchgetränk zu erhalten, wobei Schritt b) vor, während oder nach Schritt c) durchgeführt wird.

2. Verfahren nach Anspruch 1, wobei das gelöste Sauerstoffniveau des Milchsubstrats auf unter 80 % des Sättigungsniveaus reduziert wird.

3. Verfahren nach einem der vorhergehenden Ansprüche, wobei das Milchsubstrat vor der Gärung einer Pasteurisierung unterzogen wird und die Enzymbehandlung vor der Pasteurisierung durchgeführt wird.

4. Verfahren nach einem der vorhergehenden Ansprüche, wobei das Milchsubstrat vor der Behandlung mit dem Enzym, das Transglutaminaseaktivität aufweist, einer Wärmebehandlung unterzogen wird.

5. Verfahren nach einem der vorhergehenden Ansprüche, wobei dem Milchsubstrat vor der Behandlung mit dem Enzym, das Transglutaminaseaktivität aufweist, Glutathion zugefügt wird.

6. Verfahren nach einem der vorhergehenden Ansprüche, wobei der Mikroorganismus ein Milchsäurebakterium ist.

7. Verfahren nach einem der vorhergehenden Ansprüche, wobei das gegorene Milchsubstrat mit einem Sirup vermischt wird und die Mischung einer Homogenisierung unterzogen wird.

8. Verfahren nach einem der vorhergehenden Ansprüche, wobei das gesäuerte Milchgetränk als Getränk konsumiert wird.

9. Verfahren nach einem der vorhergehenden Ansprüche, wobei das gesäuerte Milchgetränk einen Gehalt an fettfreier Milchtrockenmasse von weniger als 8 % aufweist.

10. Verfahren nach einem der vorhergehenden Ansprüche, wobei das gesäuerte Milchgetränk einen Fettgehalt von weniger als 2 % aufweist.

11. Verfahren nach Anspruch 10, wobei das gesäuerte Milchgetränk einen Fettgehalt von weniger als 0,5 % aufweist.

12. Verfahren nach einem der vorhergehenden Ansprüche, wobei das Enzym, das Transglutaminaseaktivität aufzeigt, rekombinant hergestellt wird.

13. Verfahren nach einem der vorhergehenden Ansprüche, wobei das Enzym, das Transglutaminaseaktivität aufweist, aus einem Bakterium der Gattung *Streptomyces* gewonnen wird.

14. Verfahren nach einem der vorhergehenden Ansprüche, wobei das Enzym mindestens 50 % Identität mit SEQ ID NO: 1 oder SEQ ID NO: 2 oder mit einem Transglutaminase-aktiven Fragment von einem dieser beiden aufweist.

## Revendications

1. Méthode de production d'une boisson lactée acidifiée, ladite méthode comprenant:
a) fournir un substrat de lait ayant une teneur en protéines supérieure à 5%;
b) traiter le substrat de lait avec une enzyme ayant une activité de transglutaminase;
c) fermenter le substrat de lait avec un micro-organisme; et
d) diluer le substrat de lait fermenté au moins 1,5 fois pour obtenir la boisson lactée acidifiée;
où la phase b) est effectuée avant, pendant ou après la phase c).

2. Méthode selon la revendication 1, où le niveau d'oxygène dissout du substrat de lait est réduit à moins de 80% du niveau de saturation.

3. Méthode selon l'une quelconque des revendications précédentes, où le substrat de lait est soumis à une pasteurisation avant la fermentation et le traitement enzymatique est effectué avant la pasteurisation.

4. Méthode selon l'une quelconque des revendications précédentes, où le substrat de lait est soumis à un traitement thermique avant le traitement avec l'enzyme ayant une activité de transglutaminase.

5. Méthode selon l'une quelconque des revendications précédentes, où du glutathion est ajouté au substrat de lait avant le traitement avec l'enzyme ayant une activité de transglutaminase.

6. Méthode selon l'une quelconque des revendications précédentes, où le micro-organisme est une bactérie d'acide lactique.

7. Méthode selon l'une quelconque des revendications précédentes, où le substrat de lait fermenté est mélangé avec un sirop et le mélange est soumis à une homogénéisation.

8. Méthode selon l'une quelconque des revendications précédentes, où la boisson lactée acidifiée est consommée comme une boisson.

9. Méthode selon l'une quelconque des revendications précédentes, où la boisson lactée acidifiée a une teneur en matière solide non grasse du lait inférieure à 8%.

10. Méthode selon l'une quelconque des revendications précédentes, où la boisson lactée acidifiée a une teneur en matières grasses inférieure à 2%.

11. Méthode selon la revendication 10, où la boisson lactée acidifiée a une teneur en matières grasses inférieure à 0,5%.

12. Méthode selon l'une quelconque des revendications précédentes, où l'enzyme ayant une activité de transglutaminase est produite par recombinaison.

13. Méthode selon l'une quelconque des revendications précédentes, où l'enzyme ayant une activité de transglutaminase est obtenue d'une bactérie appartenant au genre *Streptomyces.*

14. Méthode selon l'une quelconque des revendications précédentes, où l'enzyme a au moins 50% d'identité avec SEQ ID NO: 1 ou SEQ ID NO: 2, ou avec un fragment actif de transglutaminase de l'une quelconque de cela.


### SEQUENCE LISTING

<110> Novozymes A/S
<120> Method for producing an acidified milk drink
<130> 11288.204-WO
<160> 3
<170> PatentIn version 3.5
<210> 1
   <211> 418
   <212> PRT
   <213> Streptomyces lydicus
<400> 1
   Met Tyr Lys Arg Arg Ser Leu Leu Ala Phe Ala Thr Val Ser Ala Ala
   1               5                   10                  15
   Ile Phe Thr Ala Gly Val Met Pro Ser Val Ser His Ala Ala Ser Gly
               20                  25                  30
   Gly Asp Gly Glu Arg Glu Gly Ser Tyr Ala Glu Thr His Gly Leu Thr
           35                  40                  45
   Ala Glu Asp Val Lys Asn Ile Asn Ala Leu Asn Lys Arg Ala Leu Asn
       50                  55                  60
   Ala Gly Gln Pro Gly Asn Ser Leu Ala Glu Leu Pro Pro Ser Val Ser
   65                  70                  75                  80
   Ala Leu Phe Arg Ala Pro Asp Ala Ala Asp Glu Arg Val Thr Pro Pro
                   85                  90                  95
   Ala Glu Pro Leu Asn Arg Met Pro Asp Ala Tyr Arg Ala Tyr Gly Gly
               100                 105                 110
   Arg Ala Thr Thr Val Val Asn Asn Tyr Ile Arg Lys Trp Gln Gln Val
           115                 120                 125
   Tyr Ser His Arg Asp Gly Ile Gln Gln Gln Met Thr Glu Glu Gln Arg
       130                 135                 140
   Glu Lys Leu Ser Tyr Gly Cys Val Gly Ile Thr Trp Val Asn Ser Gly
   145                 150                 155                 160
   Pro Tyr Pro Thr Asn Lys Leu Ala Phe Ala Phe Phe Asp Glu Asn Lys
                   165                 170                 175
   Tyr Lys Ser Asp Leu Glu Asn Ser Arg Pro Arg Pro Asn Glu Thr Gln
               180                 185                 190
   Ala Glu Phe Glu Gly Arg Ile Val Lys Asp Ser Phe Asp Glu Gly Lys
           195                 200                 205
   Gly Phe Lys Arg Ala Arg Asp Val Ala Ser Val Met Asn Lys Ala Leu
       210                 215                 220
   Asp Ser Ala His Asp Glu Gly Thr Tyr Ile Asp Asn Leu Lys Thr Glu
   225                 230                 235                 240
   Leu Ala Asn Lys Asn Asp Ala Leu Arg Tyr Glu Asp Gly Arg Ser Asn
                   245                 250                 255
   Phe Tyr Ser Ala Leu Arg Asn Thr Pro Ser Phe Lys Glu Arg Asp Gly
               260                 265                 270
   Gly Asn Tyr Asp Pro Ser Lys Met Lys Ala Val Val Tyr Ser Lys His
           275                 280                 285
   Phe Trp Ser Gly Gln Asp Gln Arg Gly Ser Ser Asp Lys Arg Lys Tyr
       290                 295                 300
   Gly Asp Pro Asp Ala Phe Arg Pro Asp Gln Gly Thr Gly Leu Val Asp
   305                 310                 315                 320
   Met Ser Lys Asp Arg Asn Ile Pro Arg Ser Pro Ala Gln Pro Gly Glu
                   325                 330                 335
   Ser Trp Val Asn Phe Asp Tyr Gly Trp Phe Gly Ala Gln Thr Glu Ser
               340                 345                 350
   Asp Ala Asp Lys Thr Ile Trp Thr His Ala Asn His Tyr His Ala Pro
           355                 360                 365
   Asn Gly Gly Leu Gly Pro Met Asn Val Tyr Glu Ser Lys Phe Arg Asn
       370                 375                 380
   Trp Ser Ala Gly Tyr Ala Asp Phe Asp Arg Gly Thr Tyr Val Ile Thr
   385                 390                 395                 400
   Phe Ile Pro Lys Ser Trp Asn Thr Ala Pro Ala Glu Val Lys Gln Gly
                   405                 410                 415
   Trp Ser
<210> 2
   <211> 407
   <212> PRT
   <213> Streptomyces mobaraensis
<400> 2
<210> 3
   <211> 573
   <212> PRT
   <213> Phytophthora cactorum
<400> 3
   Met Val Tyr Ser Pro Ser Ser Tyr Leu Ile Ser Ala Ala Val Ala Ala
   1               5                   10                  15
   Val Ala Phe Gln Ile Gln Gln Ala Thr Ala Gly Ser Leu Tyr Tyr Gly
               20                  25                  30
   Ala Phe Ser Val Ser Asp Thr Asp Gly Lys Ile Ser Asn Asp Ser Pro
           35                  40                  45
   Leu Val Gly Thr Glu Ile Ser Asp Gln Asp Cys Ala Ile Glu Val Glu
       50                  55                  60
   Val Asp Pro Thr Leu Pro Asp Ile Thr Thr Ile Ser Thr Val Pro Val
   65                  70                  75                  80
   Thr Tyr Pro Asp Leu Leu Ala Asn Leu Thr Thr Ala Pro Ser Glu Pro
                   85                  90                  95
   Val Phe Ser Lys Val Gly Thr Val Ile Met Ser Glu Glu Thr Pro Ala
               100                 105                 110
   Thr Asp Ala Asp Gln Asp Ala Tyr Ile Asp Ser Thr Leu Pro Trp Ile
           115                 120                 125
   Gly Thr Gly Thr Pro Thr Lys Thr Gly Val Glu Lys Thr Ala Lys Asp
       130                 135                 140
   Cys Ala Thr Gly Trp Glu Glu Thr Ala Ala Gly Asp Lys Leu Gln Glu
   145                 150                 155                 160
   Lys Leu Glu Lys Lys Arg Arg Leu Glu Glu Asn Thr Asn Arg Asp Ile
                   165                 170                 175
   Ala Arg Leu Glu Ala Tyr Phe Gly Thr Lys Met Glu Met Thr Leu Lys
               180                 185                 190
   Asp Leu Pro Thr Gln Gly Val His Thr Pro Ser Pro Trp Ala Gly Pro
           195                 200                 205
   Tyr Trp Pro Thr Tyr Gln Asp Ser Ile Asn Val Val Trp Ser Glu Gly
       210                 215                 220
   Glu Ala Ser Pro Ala Glu Lys Tyr Ala Lys Ala Phe Gly Leu Asp Val
   225                 230                 235                 240
   Thr Asp Phe Met Asp Lys Val Ser Lys Asp Asn Gly Val Asp Ser Gln
                   245                 250                 255
   Ser Lys Arg Arg Gln Cys Gln Thr Asp Glu Gly Cys Glu Ser Leu Asn
               260                 265                 270
   Asn Ala Ser Lys Cys Ala Ile Arg Ala Gly Lys Thr Ser Gly Tyr Cys
           275                 280                 285
   Ile Pro Thr Trp Phe Gly Ile Cys His Ala Trp Ala Pro Ala Ala Ile
       290                 295                 300
   Leu Glu Ala Glu Pro Thr Cys Pro Val Thr His Asn Gly Val Thr Phe
   305                 310                 315                 320
   Gln Pro Ile Asp Ile Lys Gly Leu Ile Ser Asp Val Tyr Asp Gly Ala
                   325                 330                 335
   Gly Val Ala Thr Val Phe Thr Gly Ala Arg Tyr Asn Gly Gly Asp Asp
               340                 345                 350
   Ala Ala Asp Glu Tyr Gly Arg His Thr Asn Ala Ala Tyr Arg Asp Leu
           355                 360                 365
   Asn Pro Ala Tyr Phe His Ile Ala Ser Ala Asn Ile Leu Gly Lys Leu
       370                 375                 380
   Asn Ala Thr Phe Val Ala Asp Val Asp Ala Ala Ala Glu Val Trp Asn
   385                 390                 395                 400
   Gln Pro Val Arg Gly Phe Lys Val Phe Glu Gln Thr Ala Met Ser Leu
                   405                 410                 415
   Glu Glu Ala Ala Gln Thr Phe Tyr Gly Leu Glu Glu Tyr Pro Trp Asn
               420                 425                 430
   Ala Ala Ala Lys Ser Ile Val Tyr Val Lys Ser Arg Leu Ser Trp Ile
           435                 440                 445
   Phe Glu Thr Tyr Thr Asp Gly Gly Leu Val Ala Ser Gly Glu Ile Asn
       450                 455                 460
   Arg Tyr Thr Thr Gly Lys Tyr Tyr Tyr Tyr Leu Leu Glu Leu Asp Asp
   465                 470                 475                 480
   Ala Gly Glu Ile Ile Gly Gly Glu Trp Val Tyr Asp Ser Asp Ser Asp
                   485                 490                 495
   His Pro Asp Phe Leu Trp Val Pro Lys Ala Lys Pro Ala Ala Asp Thr
               500                 505                 510
   Val Thr Ser Ile Gly Leu Ser Tyr Ala Asp Val Ser Met Leu Leu Glu
           515                 520                 525
   Lys Ser Val Ala Cys Ser Asp Ser Thr Ser Ala Ala Gly Ser Val Ser
       530                 535                 540
   Ser Gly Ser Val Gly Glu Ser Thr Glu Ala Pro Thr Glu Val Pro Thr
   545                 550                 555                 560
   Thr Ser Thr Ser Ala Pro Thr Ser Gly Ser Gly Ala Leu
                   565                 570